(19) **Europäisches Patentamt**

**European Patent Office**

**Office européen des brevets**

(11) **EP 0 631 458 B1**

(12) **EUROPEAN PATENT SPECIFICATION**

(45) Date of publication and mention
of the grant of the patent:
**07.11.2001 Bulletin 2001/45**

(51) Int Cl.$^7$: **H04S 3/02**, H04H 5/00

(21) Application number: **94109238.9**

(22) Date of filing: **16.06.1994**

(54) **Method for obtaining a multi-channel decoder matrix**

Verfahren zur Erhaltung einer Mehrkanaldekodiermatrix

Procédé pour l'obtention d'une matrice de décodage multicanal

(84) Designated Contracting States:
**DE ES FR GB IT**

(30) Priority: **22.06.1993 EP 93401609**

(43) Date of publication of application:
**28.12.1994 Bulletin 1994/52**

(73) Proprietor: **DEUTSCHE THOMSON-BRANDT GMBH**
**78048 Villingen-Schwenningen (DE)**

(72) Inventor: **Spille, Jens**
**D-30880 Laatzen (DE)**

(74) Representative: **Hartnack, Wolfgang, Dipl.-Ing.**
**Deutsche Thomson-Brandt GmbH**
**European Patent Operations**
**Karl-Wiechert-Allee 74**
**30625 Hannover (DE)**

(56) References cited:
- **RUNDFUNKTECHNISCHE MITTEILUNGEN, vol.35, no.1, January 1991, NORDERSTEDT DE pages 10 - 16 WARNER R. TH. TEN KATE ET AL. 'EINE NEUE CODIERTECHNIK FÜR SURROUND-STEREO-SURROUND(4-2-4)'**
- **ICASSP 92 IEEE INTERNATIONAL CONFERENCE ON ACOUSTICS, SPEECH AND SIGNAL PROCESSING, vol.2, 23 March 1992, SAN FRANCISCO, US pages 205 - 208 W.R.TH TEN KATE ET AL. 'MATRIXING OF BIT RATE REDUCED AUDIO SIGNALS'**
- **HDTV 90 FOURTH INTERNATIONAL COLLOQUIUM ON ADVANCED TELEVISION SYSTEMS, 25 June 1990, OTTAWA, CA pages 3A.7.2 - 3A.7.14 'A SOUND REPRODUCTION AND TRANSMISSION SYSTEM FOR HDTV'**

**Description**

The present invention relates to a method for obtaining a multi-channel decoder matrix and to the use of such method in decoder devices.

Background

There are basic shortcomings of conventional two-channel sound systems so as to allow enhanced performance in stereophonic presentation and/or multi-lingual capability. It is recognized that the improved presentation performance is desirable not only for applications with accompanying picture but also in case of audio-only applications. A universal and compatible multi-channel sound system applicable to sound and television broadcasting, like satellite or terrestrial TV broadcasting, digital audio broadcasting (terrestrial and satellite), as well as other non-broadcasting media, e.g.,

CATV    Cable TV Distribution
CDAD    Cable Digital Audio Distribution
ENG    Electronic News Gathering (including Satellite News Gathering)
IPC    Interpersonal Communications (videoconferencing, video-phone, etc.)
ISM    Interactive Storage Media (optical disks, etc.)
NDB    Network Database Services (via ATM, etc.)
DSM    Digital Storage Media (digital VTR, etc.)
EC    Electronic Cinema
HTT    Home Television Theatre
ISDN    Integrated Service Digital Network

seems to be very attractive to the manufacturer, producer, and consumer.

The ISO/MPEG-Audio Multichannel system is an audio subband coding system, which can be used to transfer high quality digital multi-channel and/or multi-lingual audio information on channels with limited capacity. One of the basic features is the backwards compatibility to ISO 11172-3 IS coded mono, stereo or dual channel audio programs. It is designed for use in different applications.

As regards stereophonic presentation, the use of an additional center loudspeaker channel C and two surround loudspeaker channels Ls (or LS) and Rs (or RS) is recommended, augmenting the front left and right loudspeaker channels L and R. This reference sound format is referred to as "3/2-stereo" (3 front / 2 surround loudspeaker channels), and requires the transmission of five appropriately formatted sound signals.

For picture accompanying sound applications (e.g. HDTV), the three front loudspeaker channels ensure sufficient directional stability and clarity of the picture related frontal images, according to the common practice in the cinema. The dominant benefit is the "stable center", which is guaranteed at any location of the listener and important for most of the dialogue. Additionally for audio-only applications the 3/2-stereo format has been found to be the appropriate improvement of two-channel stereophony. The addition of one pair of surround loudspeaker channels allows improved realism of auditory ambience.

In basic terms, the transmission of the five audio signals of a 3/2 sound system requires five transmission channels (although, in the context of bit-rate reduced signals, these are not necessarily totally independent). In order that two of the transmitted signals can provide a stereo service on their own, the source sound signals are generally combined in a linear matrix prior to encoding. These combined signals (and their transmission channels) are identified by the notation T1, T2, T3, T4 and T5. For compatibility reasons, an ISO 11172-3 IS audio decoder properly decodes the basic stereo information, consisting of basic left and right channels. The signals in these channels constitute an appropriate downmix of the audio information in all channels. The appropriate downmix equations are given by the equations (T1 and T2 correspond to Lo and Ro) :

$$Lo = L + x * C + y * Ls \qquad (1)$$

$$Ro = R + x * C + y * Rs \qquad (2)$$

The parameter *tc_allocation* contains information on the transmission channel allocation in a subband group:

| tc_allocation | T3 | T4 | T5 |
|:---:|:---:|:---:|:---:|
| 0 | L | R | C |
| 1 | L | R | LS |
| 2 | L | R | RS |
| 3 | L | C | LS |
| 4 | L | C | RS |
| 5 | L | LS | RS |
| 6 | R | C | LS |
| 7 | R | C | RS |
| 8 | R | LS | RS |
| 9 | C | LS | RS |
| 10 | L | R | - |
| 11 | LS | RS | - |
| 12 | L | - | - |
| 13 | R | - | - |
| 14 | C | - | - |
| 15 | - | - | - |

Further details are described in "ISO 11172-3 compatible low bit rate multi-channel audio coding and conventional stereo coding at lower sampling frequencies", ISO/IEC JTC1/SC29/WG11 N0403, MPEG93/479, 11. June 1993.

Invention

It is an object of the invention to obtain a decoder matrix in a decoder device without storing a decoder matrix table containing multiple of these matrices. This object is reached by the method disclosed in claim 1.

The values required for equations (1) and (2) can be represented by a multichannel (MC) encoder matrix. The following matrix may serve as an example:

$$
\begin{pmatrix} Lo \\ Ro \\ T3 \\ T4 \\ T5 \end{pmatrix} = \begin{pmatrix} 1 & 0 & x & y & 0 \\ 0 & 1 & x & 0 & y \\ 0 & 1 & 0 & 0 & 0 \\ 1 & 0 & 0 & 0 & 0 \\ 0 & 0 & 0 & 1 & 0 \end{pmatrix} \begin{pmatrix} L \\ R \\ C \\ Ls \\ Rs \end{pmatrix}
$$

In a decoder, the inverse matrix is required to extract the values L, R, C, Ls and Rs. The variation of these parameters would allow a huge amount of different decoder matrices even if a lot of them are not useful or not possible. Some (e.g. 10) bits are transmitted, which represent e.g. the values x and y, center YES/NO, surround NO/MONO/STEREO, content of T3, T4 and T5. These bits can be used to address in the decoder a large memory in which the corresponding inverse matrices are listed.

It is to expensive to implement all decoder matrix combinations in a memory table within a consumer decoder device, therefore the number of combinations must be reduced.

Advantageously, instead of adressing a decoder matrix stored in a decoder memory, at first the current encoder matrix can be reconstructed in the decoder using the related transmitted information. Then, the required decoder matrix can be computed from the reconstructed encoder matrix. This is possible due to the fact that the necessary computation time is significant lower than the required computation time for a decoder audio signal filter.

Drawings

Preferred embodiments of the invention are described with reference to the accompanying drawings, which show in:

Fig. 1    arrangement of main, center and surround channels;
Fig. 2    apparatus for computing a decoder matrix.

Preferred embodiments

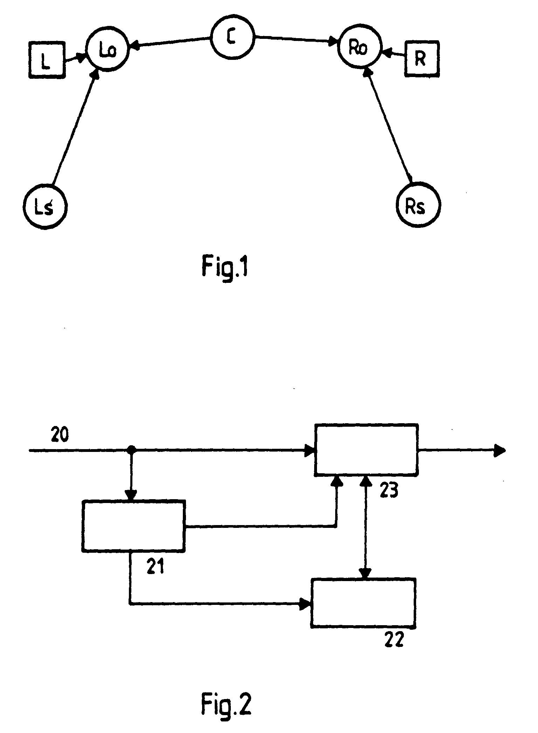

In Fig. 1 the left and right main channels L and R are depicted together with an additional center channel C and surround channels Ls and Rs. For compatibility reasons (MPEG1/MPEG2), not these signals but the signals Lo, Ro (which include the significant audio information) and T3, T4 and T5 are transmitted.

The decoder matrices for each of the 11 subband groups per frame are indicated by the following header bits:

| Bitstream | Information | No./frame | Bits | Total |
|---|---|---|---|---|
| MPEG1 | MODE | 1 | 2 | 2 |
| MPEG2 | Center | 1 | 1 | 1 |
| -"- | Surround | 1 | 2 | 2 |
| -"- | Presentation Matrix | 1 | 2 | 2 |
| -"- | tc_allocation *) | [1 or] 11 | 3 | 33 |
| Sum | | | 10 | 40 |

*) without dynamic range control

This number of bits leads theoretically to up to 1024 different decoder matrices. To reduce this large number, e.g. the multichannel feature can be restricted to the MPEG1 *stereo* and *joint_stereo* mode. But this means that combinations like 1/2 and 1/1 or 1/0 + 1/0 + 2/0 are not allowed. The remaining combinations can be seen from the following list::

| Signal Configuration table: | | | |
|---|---|---|---|
| **MPEG1** Mode | **MPEG2** Center | Surround | **Signal Configuration** |
| Stereo & Joint Stereo | yes | no | LRC (3/0) |
| | | mono | LRCS (3/1) |
| | | stereo | LRCLsRs (3/2) |
| | | second stereo | $LRCL_2R_2$ (3/0 + 2/0) |
| | no | no | **LR (no MC)** |
| | | mono | LRS (2/1) |
| | | stereo | LRLsRs (2/2) |
| | | second stereo | $LRL_2R_2$ (2/0 + 2/0) |
| Dual | no | no | $M_1M_2$ (no MC) |
| Single | no | no | M **(no MC)** |
| Remark: 'no MC' does not mean 'no ML' | | | |

From the MPEG bitstream the *presentationmatrix* information can be used to find out, how the basic stereo information Lo and Ro has been generated in the encoder *(single_channel* and *dual_channel* are not allowed). Again, all combinations are listed in the next table. At present, one value of the presentation matrix is not fixed yet, but is set to -6 dB in the next table.

| Compatible Basic stereo stable: | | |
|---|---|---|
| **Signal Config.** | **Presentation Matrix** | **Xo** |
| LRCLsRs (3/2) | -3 dB S.; -3 dB C. | X + 0.707 C + 0.707 Xs |
| | -6 dB S.; -3 dB C. | X + 0.707 C + 0.5 Xs |
| | -∞ dB S.; -3 dB C. | X + 0.707 C |
| | -∞ dB S.; -∞ dB C. | X |
| LRCS (3/1) | -3 dB S.; -3 dB C. | X + 0.707 C + 0.707 S |
| | -6 dB S.; -3 dB C. | X + 0.707 C + 0.5 S |
| | -∞ dB S.; -3 dB C. | X + 0.707 C |
| | -∞ dB S.; -∞ dB C. | X |
| LRCL$_2$R$_2$ (3/0+2/0) & LRC (3/0) | -3 dB S.; -3 dB C. | X + 0.707 C |
| | -6 dB S.; -3 dB C. | X + 0.707 C |
| | -∞ dB S.; -3 dB C. | X + 0.707 C |
| | -∞ dB S.; -∞ dB C. | X |
| LRLsRs (2/2) | -3 dB S.; -3 dB C. | X + 0.707 Xs |
| | -6 dB S.; -3 dB C. | X + 0.5 Xs |
| | -∞ dB S.; -3 dB C. | X |
| | -∞ dB S.; -∞ dB C. | X |
| LRS (2/1) | -3 dB S.; -3 dB C. | X + 0.707 S |
| | -6 dB S.; -3 dB C. | X + 0.5 S |
| | -∞ dB S.; -3 dB C. | X |
| | -∞ dB S.; -∞ dB C. | X |
| LRL$_2$R$_2$ (2/0 + 2/0) | -3 dB S.; -3 dB C. | X |
| | -6 dB S.; -3 dB C. | X |
| | -∞ dB S.; -3 dB C. | X |
| | -∞ dB S.; -∞ dB C. | X |

Now, all information is collected which is useful for a whole frame. Finally, the information about the allocation of the transport channels is needed, i.e. which audio channel is in which transport channel for a subband group. This information is indicated by the *tc_allocation*. For each signal configuration an other list is used. The table below (originally elaborated by PHILIPS) shows that again not all possibilities are allowed.

| tc_allocation table: | | | | | | | | |
|---|---|---|---|---|---|---|---|---|
| **Signal Config .** | Presentation Matrix | Tc_ all. | (T1) | (T2) | T3 | T4 | T5 | **MTX No** |
| LRCLsRs (3/2) | -3dB S; -3dB C | 0 | L | R | C | LS | RS | **1/1** |
| | | 1 | C | R | L | LS | RS | **2/2** |
| | | 2 | L | C | R | LS | RS | **3/3** |
| | | 3 | Ls | R | C | L | RS | **4/4** |
| | | 4 | L | Rs | C | LS | R | **5/5** |
| | | 5 | Ls | Rs | C | L | R | **6/6** |
| | | 6 | Ls | C | R | L | RS | **7/7** |
| | | 7 | C | Rs | L | LS | R | **8/8** |
| | | 8 | - | - | | | | **(x/x)** |

(continued)

tc_allocation table:

| Signal Config . | Presentation Matrix | Tc_ all. | (T1) | (T2) | T3 | T4 | T5 | MTX No |
|---|---|---|---|---|---|---|---|---|
| | | 9 | - | - | | | | **(x/x)** |
| | | 10 | - | | | | | **(x/x)** |
| | | 11 | - | | - dyn.crosstalk | | | **(x/x)** |
| | | 12 | - | - | | | | **(x/x)** |
| | | 13 | - | - | | | | **(x/x)** |
| | | 14 | - | - | | | | **(x/x)** |
| | | 15 | - | - | | | | **(x/x)** |
| | -6dB S; -3dB C | 0 | L | R | C | LS | RS | **1/9** |
| | | 1 | C | R | L | LS | RS | **2/10** |
| | | 2 | L | C | R | LS | RS | **3/11** |
| | | 3 | Ls | R | C | L | RS | **4/12** |
| | | 4 | L | Rs | C | LS | R | **5/13** |
| | | 5 | Ls | Rs | C | L | R | **6/14** |
| | | 6 | Ls | C | R | L | RS | **7/15** |
| | | 7 | C | Rs | L | LS | R | **8/16** |
| | | x | - | - dyn.cross talk | | | | **(x/x)** |
| | -∞dB S; -3dB C | 0 | L | R | C | LS | RS | **1/17** |
| | | 1 | C | R | L | LS | RS | **2/18** |
| | | 2 | L | C | R | LS | RS | **3/19** |
| | | x | - | - dyn. cross talk | | | | **(x/x)** |
| | -∞dB S; -∞dB C | 0 | L | R | C | LS | **RS** | **1/20** |
| | | x | - | - dyn. cross talk | | | | **(x/x)** |
| LRCS (3/1) | -3dB S; -3dB C | 0 | L | R | C | S | - | **9/21** |
| | | 1 | C | R | L | S | - | **10/22** |
| | | 2 | L | C | R | S | - | **11/23** |
| | | 3 | S | R | C | L | - | **12/24** |
| | | 4 | L | S | C | R | - | **13/25** |
| | | x | - | - dyn. cross talk | | | | **(x/x)** |
| | -6dB S; -3dB C | 0 | L | R | C | S | - | **9/26** |
| | | 1 | C | R | L | S | - | **10/27** |
| | | 2 | L | C | R | S | - | **11/28** |
| | | 3 | S | R | C | L | - | **12/29** |
| | | 4 | L | S | C | R | - | **13/30** |
| | | x | - | - dyn. cross talk | | | | **(x/x)** |
| | -∞dB S; -3dB C | 0 | L | R | C | S | - | **9/31** |
| | | 1 | C | R | L | S | - | **10/32** |
| | | 2 | L | C | R | S | - | **11/33** |
| | | x | - | - dyn. cross talk | | | | **(x/x)** |
| | -∞dB S; -∞dB C | 0 | L | R | C | S | - | **9/34** |
| | | x | - | - dyn. cross talk | | | | **(x/x)** |

(continued)

| tc_allocation table: | | | | | | | | | |
|---|---|---|---|---|---|---|---|---|---|
| **Signal Config**. | Presentation Matrix | Tc_ all. | (T1) | (T2) | T3 | T4 | T5 | **MTX No** |
| LRCL$_2$R$_2$ (3/0 + 2/0) & LRC (3/0) | -3dB S; -3dB C | 0 | L | R | C | (L2) | (R2) | **14/35** |
| | | 1 | C | R | L | (L2) | (R2) | **15/36** |
| | | 2 | L | C | R | (L2) | (R2) | **16/37** |
| | | x | - | - dyn. cross talk | | | | **(x/x)** |
| | -6dB S; -3dB C | 0 | L | R | C | (L2) | (R2) | **14/38** |
| | | 1 | C | R | L | (L2) | (R2) | **15/39** |
| | | 2 | L | C | R | (L2) | (R2) | **16/40** |
| | | x | - | - dyn. cross talk | | | | **(x/x)** |
| | -∞dB S; -3dB C | 0 | L | R | C | (L2) | (R2) | **14/41** |
| | | 1 | C | R | L | (L2) | (R2) | **15/42** |
| | | 2 | L | C | R | (L2) | (R2) | **16/43** |
| | | x | - | - dyn. cross talk | | | | **(x/x)** |
| | -∞dB S; -∞dB C | 0 | L | R | C | (L2) | **(R2)** | **14/44** |
| | | x | - | - | dyn. cross talk | | | **(x/x)** |
| LRLsRs (2/2) | -3dB S; -3dB C | 0 | L | R | LS | RS | - | **17/45** |
| | | 3 | Ls | R | L | RS | | **18/46** |
| | | 4 | L | Rs | LS | R | - | **19/47** |
| | | 5 | Ls | R | L | R | - | **20/48** |
| | | x | - | - | dyn. cross talk | | | **(x/x)** |
| | -6dB S; -3dB C | 0 | L | R | LS | RS | - | **17/49** |
| | | 3 | Ls | R | L | RS | - | **18/50** |
| | | 4 | L | Rs | LS | R | - | **19/51** |
| | | 5 | Ls | R | L | R | - | **20/52** |
| | | x | - | - | dyn. cross talk | | | **(x/x)** |
| | -∞dB S; -3dB C | 0 | L | R | LS | RS | - | **17/53** |
| | | x | - | - dyn. cross talk | | | | **(x/x)** |
| | -∞dB S; -∞dB C | 0 | L | R | LS | RS | | **17/54** |
| | | x | - | - | dyn. cross talk | | | **(x/x)** |
| LRS (2/1) | -3dB S; -3dB C | 0 | L | R | S | - | - | **21/55** |
| | | 3 | S | R | L | - | - | **22/56** |
| | | 4 | L | S | R | - | - | **23/57** |
| | | x | - | - | dyn. cross talk | | | **(x/x)** |
| | -6dB S; -3dB C | 0 | L | R | S | - | - | **21/58** |
| | | 3 | S | R | L | - | - | **22/59** |
| | | 4 | L | S | R | - | - | **23/60** |
| | | x | - | - | dyn. cross talk | | | **(x/x)** |

(continued)

tc_allocation table:

| Signal Config. | Presentation Matrix | Tc_ all. | (T1) | (T2) | T3 | T4 | T5 | MTX No |
|---|---|---|---|---|---|---|---|---|
| | -∞dB S; -∞dB C | 0 | L | R | S | - | - | **21/61** |
| | | 3 | | | | | | |
| | | 4 | | | | | | |
| | | x | - | - | dyn. cross talk | | | **(x/x)** |
| | -∞dB S; -∞dB C | 0 | L | R | S | - | - | **21/62** |
| | | 3 | | | | | | |
| | | 4 | | | | | | |
| | | x | - | - | dyn. cross talk | | | **(x/x)** |
| LR | -3dB S; -3dB C | no | L | R | (L2) | (R2) | - | **no** |
| (2/0) | -6dB S; -3dB C | no | L | R | (L2) | (R2) | - | **no** |
| $LRL_2R_2$ | -∞dB S; -3dB C | no | L | R | (L2) | (R2) | - | **no** |
| (2/0 +2/0) | - -∞dB S; -∞dB C | no | L | R | (L2) | (R2) | - | **no** |

With the restriction to MPEG 1 stereo and *joint_stereo* only, no further matrices seem to be possible. So, the storage of 23 types leading to 62 real decoder matrices without dynamic cross talk are required.

The last row in the list above gives a matrix type/real number. All 23 encoder and decoder matrixes types are listed in the next list.

Encoder and decoder matrices:

(the second matrix column is received by matrix inversion)

Example:

$$\begin{bmatrix} Lo \\ Ro \\ T3 \\ T4 \\ T5 \end{bmatrix} = \begin{bmatrix} 1 & 0 & x & y & 0 \\ 0 & 1 & x & 0 & y \\ 1 & 0 & 0 & 0 & 0 \\ 0 & 1 & 0 & 0 & 0 \\ 0 & 0 & 1 & 0 & 0 \end{bmatrix} \begin{bmatrix} R \\ L \\ C \\ Ls \\ Rs \end{bmatrix}$$

$$x = \sqrt{\frac{1}{2}}.$$

$$y1 = \sqrt{\frac{1}{2}} \qquad y2 = \frac{1}{2}$$

1) $$\begin{bmatrix} 1 & 0 & x & y & 0 \\ 0 & 1 & x & 0 & y \\ 0 & 0 & 1 & 0 & 0 \\ 0 & 0 & 0 & 1 & 0 \\ 0 & 0 & 0 & 0 & 1 \end{bmatrix} \qquad \begin{bmatrix} 1 & 0 & -x & -y & 0 \\ 0 & 1 & -x & 0 & -y \\ 0 & 0 & 1 & 0 & 0 \\ 0 & 0 & 0 & 1 & 0 \\ 0 & 0 & 0 & 0 & 1 \end{bmatrix}$$

$$x = 0.70711$$
$$y1 = 0.70711 \quad y2 = 0.5$$

2) $$\begin{bmatrix} 1 & 0 & x & y & 0 \\ 0 & 1 & x & 0 & y \\ 1 & 0 & 0 & 0 & 0 \\ 0 & 0 & 0 & 1 & 0 \\ 0 & 0 & 0 & 0 & 1 \end{bmatrix} \qquad \begin{bmatrix} 0 & 0 & 1 & 0 & 0 \\ -1 & 1 & 1 & y & -y \\ \frac{1}{x} & 0 & \frac{-1}{x} & \frac{-y}{x} & 0 \\ 0 & 0 & 0 & 1 & 0 \\ 0 & 0 & 0 & 0 & 1 \end{bmatrix}$$

$$\frac{y1}{x} = 1 \qquad \frac{y2}{x} = 0.70711$$

$$\frac{1}{x} = 1.41421$$

3)
$$\begin{bmatrix} 1 & 0 & x & y & 0 \\ 0 & 1 & x & 0 & y \\ 0 & 1 & 0 & 0 & 0 \\ 0 & 0 & 0 & 1 & 0 \\ 0 & 0 & 0 & 0 & 1 \end{bmatrix} \qquad \begin{bmatrix} 1 & -1 & 1 & -y & y \\ 0 & 0 & 1 & 0 & 0 \\ 0 & \frac{1}{x} & \frac{-1}{x} & 0 & \frac{-y}{x} \\ 0 & 0 & 0 & 1 & 0 \\ 0 & 0 & 0 & 0 & 1 \end{bmatrix}$$

4)
$$\begin{bmatrix} 1 & 0 & x & y & 0 \\ 0 & 1 & x & 0 & y \\ 0 & 0 & 1 & 0 & 0 \\ 1 & 0 & 0 & 0 & 0 \\ 0 & 0 & 0 & 0 & 1 \end{bmatrix} \qquad \begin{bmatrix} 0 & 0 & 0 & 1 & 0 \\ 0 & 1 & -x & 0 & -y \\ 0 & 0 & 1 & 0 & 0 \\ \frac{1}{y} & 0 & \frac{-1}{y}x & \frac{-1}{y} & 0 \\ 0 & 0 & 0 & 0 & 1 \end{bmatrix}$$

$$\frac{x}{y1} = 1 \qquad \frac{x}{y2} = 1.41421$$

$$\frac{1}{y1} = 1.41421 \qquad \frac{1}{y2} = 2$$

5)
$$\begin{bmatrix} 1 & 0 & x & y & 0 \\ 0 & 1 & x & 0 & y \\ 0 & 0 & 1 & 0 & 0 \\ 0 & 0 & 0 & 1 & 0 \\ 0 & 1 & 0 & 0 & 0 \end{bmatrix} \qquad \begin{bmatrix} 1 & 0 & -x & -y & 0 \\ 0 & 0 & 0 & 0 & 1 \\ 0 & 0 & 1 & 0 & 0 \\ 0 & 0 & 0 & 1 & 0 \\ 0 & \frac{1}{y} & \frac{-1}{y}x & 0 & \frac{-1}{y} \end{bmatrix}$$

6)
$$\begin{bmatrix} 1 & 0 & x & y & 0 \\ 0 & 1 & x & 0 & y \\ 0 & 0 & 1 & 0 & 0 \\ 1 & 0 & 0 & 0 & 0 \\ 0 & 1 & 0 & 0 & 0 \end{bmatrix} \qquad \begin{bmatrix} 0 & 0 & 0 & 1 & 0 \\ 0 & 0 & 0 & 0 & 1 \\ 0 & 0 & 1 & 0 & 0 \\ \frac{1}{y} & 0 & \frac{-1}{y}x & \frac{-1}{y} & 0 \\ 0 & \frac{1}{y} & \frac{-1}{y}x & 0 & \frac{-1}{y} \end{bmatrix}$$

7)
$$\begin{bmatrix} 1 & 0 & x & y & 0 \\ 0 & 1 & x & 0 & y \\ 0 & 1 & 0 & 0 & 0 \\ 1 & 0 & 0 & 0 & 0 \\ 0 & 0 & 0 & 0 & 1 \end{bmatrix} \qquad \begin{bmatrix} 0 & 0 & 0 & 1 & 0 \\ 0 & 0 & 1 & 0 & 0 \\ 0 & \frac{1}{x} & \frac{-1}{x} & 0 & \frac{-y}{x} \\ \frac{1}{y} & \frac{-1}{y} & \frac{1}{y} & \frac{-1}{y} & 1 \\ 0 & 0 & 0 & 0 & 1 \end{bmatrix}$$

8)
$$\begin{bmatrix} 1 & 0 & x & y & 0 \\ 0 & 1 & x & 0 & y \\ 1 & 0 & 0 & 0 & 0 \\ 0 & 0 & 0 & 1 & 0 \\ 0 & 1 & 0 & 0 & 0 \end{bmatrix} \qquad \begin{bmatrix} 0 & 0 & 1 & 0 & 0 \\ 0 & 0 & 0 & 0 & 1 \\ \frac{1}{x} & 0 & \frac{-1}{x} & \frac{-y}{x} & 0 \\ 0 & 0 & 0 & 1 & 0 \\ \frac{-1}{y} & \frac{1}{y} & \frac{1}{y} & 1 & \frac{-1}{y} \end{bmatrix}$$

Example:

$$\begin{bmatrix} Lo \\ Ro \\ T3 \\ T4 \end{bmatrix} = \begin{bmatrix} 1 & x & 0 & y \\ 0 & 0 & 0 & 0 \\ 1 & 0 & 0 & 0 \\ 0 & 1 & 0 & 0 \end{bmatrix} \begin{bmatrix} L \\ R \\ C \\ S \end{bmatrix}$$

9) $\begin{bmatrix} 1 & 0 & x & y \\ 0 & 1 & x & y \\ 0 & 0 & 1 & 0 \\ 0 & 0 & 0 & 1 \end{bmatrix}$ $\qquad$ $\begin{bmatrix} 1 & 0 & -x & -y \\ 0 & 1 & -x & -y \\ 0 & 0 & 1 & 0 \\ 0 & 0 & 0 & 1 \end{bmatrix}$

10) $\begin{bmatrix} 1 & 0 & x & y \\ 0 & 1 & x & y \\ 1 & 0 & 0 & 0 \\ 0 & 0 & 0 & 1 \end{bmatrix}$ $\qquad$ $\begin{bmatrix} 0 & 0 & 1 & 0 \\ -1 & 1 & 1 & 0 \\ \dfrac{1}{x} & 0 & \dfrac{-1}{x} & \dfrac{-y}{x} \\ 0 & 0 & 0 & 1 \end{bmatrix}$

11) $\begin{bmatrix} 1 & 0 & x & y \\ 0 & 1 & x & y \\ 0 & 1 & 0 & 0 \\ 0 & 0 & 0 & 1 \end{bmatrix}$ $\qquad$ $\begin{bmatrix} 1 & -1 & 1 & 0 \\ 0 & 0 & 1 & 0 \\ 0 & \dfrac{1}{x} & \dfrac{-1}{x} & \dfrac{-y}{x} \\ 0 & 0 & 0 & 1 \end{bmatrix}$

12) $\begin{bmatrix} 1 & 0 & x & y \\ 0 & 1 & x & y \\ 0 & 0 & 1 & 0 \\ 1 & 0 & 0 & 0 \end{bmatrix}$ $\qquad$ $\begin{bmatrix} 0 & 0 & 0 & 1 \\ -1 & 1 & 0 & 1 \\ 0 & 0 & 1 & 0 \\ \dfrac{1}{y} & 0 & \dfrac{-x}{y} & \dfrac{-1}{y} \end{bmatrix}$

13) $\begin{bmatrix} 1 & 0 & x & y \\ 0 & 1 & x & y \\ 0 & 0 & 1 & 0 \\ 0 & 1 & 0 & 0 \end{bmatrix}$ $\qquad$ $\begin{bmatrix} 1 & -1 & 0 & 1 \\ 0 & 0 & 0 & 1 \\ 0 & 0 & 1 & 0 \\ 0 & \dfrac{1}{y} & \dfrac{-x}{y} & \dfrac{-1}{y} \end{bmatrix}$

Example:

$$\begin{bmatrix} Lo \\ Ro \\ T3 \end{bmatrix} = \begin{bmatrix} 1 & 0 & x \\ 0 & 1 & x \\ 1 & 0 & 0 \end{bmatrix} \begin{bmatrix} L \\ R \\ C \end{bmatrix}$$

14) $\begin{bmatrix} 1 & 0 & x \\ 0 & 1 & x \\ 0 & 0 & 1 \end{bmatrix}$ $\qquad$ $\begin{bmatrix} 1 & 0 & -x \\ 0 & 1 & -x \\ 0 & 0 & 1 \end{bmatrix}$

15) $\begin{bmatrix} 1 & 0 & x \\ 0 & 1 & x \\ 1 & 0 & 0 \end{bmatrix}$ $\qquad$ $\begin{bmatrix} 0 & 0 & 1 \\ -1 & 1 & 1 \\ \dfrac{1}{x} & 0 & \dfrac{-1}{x} \end{bmatrix}$

16) $\begin{bmatrix} 1 & 0 & x \\ 0 & 1 & x \\ 0 & 1 & 0 \end{bmatrix}$ $\qquad$ $\begin{bmatrix} 1 & -1 & 1 \\ 0 & 0 & 1 \\ 0 & \dfrac{1}{x} & \dfrac{-1}{x} \end{bmatrix}$

Example:

$$\begin{bmatrix} Lo \\ Ro \\ T3 \\ T4 \end{bmatrix} = \begin{bmatrix} 1 & 0 & y & 0 \\ 0 & 1 & 0 & y \\ 0 & 0 & 1 & 0 \\ 0 & 0 & 0 & 1 \end{bmatrix} \begin{bmatrix} L \\ R \\ Ls \\ Rs \end{bmatrix}$$

17) $\begin{bmatrix} 1 & 0 & y & 0 \\ 0 & 1 & 0 & y \\ 0 & 0 & 1 & 0 \\ 0 & 0 & 0 & 1 \end{bmatrix}$ $\qquad$ $\begin{bmatrix} 1 & 0 & -y & 0 \\ 0 & 1 & 0 & -y \\ 0 & 0 & 1 & 0 \\ 0 & 0 & 0 & 1 \end{bmatrix}$

18) $\begin{bmatrix} 1 & 0 & y & 0 \\ 0 & 1 & 0 & y \\ 1 & 0 & 0 & 0 \\ 0 & 0 & 0 & 1 \end{bmatrix}$ $\qquad$ $\begin{bmatrix} 0 & 0 & 1 & 0 \\ 0 & 1 & 0 & -y \\ \dfrac{1}{y} & 0 & \dfrac{-1}{y} & 0 \\ 0 & 0 & 0 & 1 \end{bmatrix}$

19) 
$$
\begin{bmatrix} 1 & 0 & y & 0 \\ 0 & 1 & 0 & y \\ 0 & 0 & 1 & 0 \\ 0 & 1 & 0 & 0 \end{bmatrix}
\qquad
\begin{bmatrix} 1 & 0 & -y & 0 \\ 0 & 0 & 0 & 1 \\ 0 & 0 & 1 & 0 \\ 0 & \dfrac{1}{y} & 0 & \dfrac{-1}{y} \end{bmatrix}
$$

20)
$$
\begin{bmatrix} 1 & 0 & y & 0 \\ 0 & 1 & 0 & y \\ 1 & 0 & 0 & 0 \\ 0 & 1 & 0 & 0 \end{bmatrix}
\qquad
\begin{bmatrix} 0 & 0 & 1 & 0 \\ 0 & 0 & 0 & 1 \\ \dfrac{1}{y} & 0 & \dfrac{-1}{y} & 0 \\ 0 & \dfrac{1}{y} & 0 & \dfrac{-1}{y} \end{bmatrix}
$$

Example:

$$
\begin{bmatrix} Lo \\ Ro \\ T3 \end{bmatrix}
=
\begin{bmatrix} 1 & 0 & y \\ 0 & 1 & y \\ 1 & 0 & 0 \end{bmatrix}
\begin{bmatrix} L \\ R \\ S \end{bmatrix}
$$

21)
$$
\begin{bmatrix} 1 & 0 & y \\ 0 & 1 & y \\ 0 & 0 & 1 \end{bmatrix}
\qquad
\begin{bmatrix} 1 & 0 & -y \\ 0 & 1 & -y \\ 0 & 0 & 1 \end{bmatrix}
$$

22)
$$
\begin{bmatrix} 1 & 0 & y \\ 0 & 1 & y \\ 1 & 0 & 0 \end{bmatrix}
\qquad
\begin{bmatrix} 0 & 0 & 1 \\ -1 & 1 & 1 \\ \dfrac{1}{y} & 0 & \dfrac{-1}{y} \end{bmatrix}
$$

23)
$$
\begin{bmatrix} 1 & 0 & y \\ 0 & 1 & y \\ 0 & 1 & 0 \end{bmatrix}
\qquad
\begin{bmatrix} 1 & -1 & 1 \\ 0 & 0 & 1 \\ 0 & \dfrac{1}{y} & \dfrac{-1}{y} \end{bmatrix}
$$

To avoid the storage of these matrices in the decoder, from the header of the MPEG bitstream the elements and the size of the matrix can be calculated. For example:

The channel on/off data are

| MPEG1 MODE | stereo | L+R |
|---|---|---|
| MPEG2 Center | yes | C |
| MPEG2 Surround | mono | S |

I.e. 4 channels:

| T1 | | x | x | x | x | | L |
|----|----|----|----|----|----|----|----|
| T2 | = | x | x | x | x | * | R |
| T3 | | x | x | x | x | | C |
| T4 | | x | x | x | x | | S |

From the above channel on/off data the matrix elements $X_{11}, X_{12}, X_{21}$ and $X_{22}$ are fixed:

| T1 | | 1 | 0 | x | x | | L |
|----|----|----|----|----|----|----|----|
| T2 | = | 0 | 1 | x | x | * | R |
| T3 | | x | x | x | x | | C |
| T4 | | x | x | x | x | | S |

The *presentationmatrix* (channel factor data) gives useful information about the factors of the basic stereo channels. For example:

| Surround | -6dB = 0.5 |
|----------|------------|
| Center | -3dB = 0.707 |

I.e. the matrix looks as followed:

| T1 | | 1 | 0 | 0.7 | 0.5 | | L |
|----|----|----|----|----|----|----|----|
| T2 | = | 0 | 1 | 0.7 | 0.5 | * | R |
| T3 | | x | x | x | x | | C |
| T4 | | x | x | x | x | | S |

Now, the matrix lines 3 and 4 are still missing. One can get this information form the *tc_allocation* table (channel allocation data), e.g. tc_allocation=2.
Then, the encoder matrix is:

| T1 | | 1 | 0 | 0.7 | 0.5 | | L |
|----|----|----|----|----|----|----|----|
| T2 | = | 0 | 1 | 0.7 | 0.5 | * | R |
| T3 | | 0 | 1 | 0 | 0 | | C |
| T4 | | 0 | 0 | 0 | 1 | | S |

The decoder matrix can be obtained by computing the inverse encoder matrix. Matrix can be carried out e.g. with Gaussian Elimination Algorithms. The following program gives an example:

```
/*
Matrix Inversion with Gauss elimination
see (J.C.Nash, "Compact numerical methods for computers", Page
62ff)
*/


#include        <stdlib.h>
#include        <stdio.h>
#include        <math.h>
#include        <float.h>


/*Max Matrix Size */
#define         M     5


/* prototype(s) */
void help(void);
void gauss_elimination(int N,float A[][2*M+1]);


/**************************************************/
void main(int argc, char *argv[])
{
    float   A[M+1][2*M+1];
    int     i,j,N;
    FILE    *infile;

    printf(" \n");
    printf(" %s: Matrix Inversion TCE \n",__FILE__);

    if(argc != 2) {
```

```
        help();
        exit(1);
   }


   printf(" The Datafile is : \"%s\" \n",argv[1]);


   if ((infile = fopen(argv[1],"r")) == NULL){
        printf(" (%d) File Open Error ",__LINE__);
        exit(1);
   }


   fscanf(infile,"%d",&N);
   if (N > M) {
        printf(" (%d) Matrix Size to large ",__LINE__);
        exit(1);
   }


   /* Read Matrix */
   for(i=1;i<=N;i++)
        for(j=1;j<=N;j++)
            fscanf(infile,"%f",&A[i][j]);


   fclose(infile);


   /* Input matix with result matix, here unity matrix */
   for(i=1;i<=N;i++)
        for(j=1;j<=N;j++){
            A[i][N+j] = 0;
            if(i==j)A[i][j+N] = 1;}


   /* Output */
   printf(" Input matrix \n");
   for(i=1;i<=N;i++){
        for(j=1;j<=N;j++)
            printf("%10.6f ",A[i][j]);
        printf("\n");
   }
```

```
        /* Calculation */
        gauss_elimination(N,A);

        /* Output */
        printf(" Invers Matrix \n");
        for(i=1;i<=N;i++){
            for(j=1;j<=N;j++)
                printf("%10.6f ",A[i][j+N]);
            printf("\n");
        }
}
/**********************************************************/
void gauss_elimination(int N,float A[][2*M+1])
/* Gauss elimination with partial pivoting */
{
        int n,p;
        int j,k,h,i;
        float D, tol,s;

        n = N;
        p = N; /* Spezial case */
        D = 1.0;
        tol = FLT_EPSILON; /* 1.19e-7  or DBL_EPSILON*/

        for (j=1;j<=n-1;j++){
           /* Find the pivot */
           s = fabs(A[j][j]); k = j;
           for (h=j+1;h<=n;h++){
              if (fabs(A[h][j] > s)){
                  s = fabs(A[h][j]);
                  k = h;
                }
           }/* end loop h */
           if (k != j ){
              for (i = j; i<= n+p;i++){
                  s = A[k][i]; A[k][i] = A[j][i]; A[j][i] = s;
              } /* end loop i */
              D = -D;
```

```
        } /* end if(k != j) */


        D = D * A[j][j];
        if (fabs(A[j][j]) <= tol) {
   printf (" \a \n (%d) Matrix is computationally singular
\n",__LINE__);
   exit(100);
        }
        for (k=j+1; k<= n; k++){
           A[k][j] = A[k][j] / A[j][j];
           for (i=j+1;i<=n+p;i++)
              A[k][i] = A[k][i]-A[k][j] * A[j][i];
        }/* end loop k */
      }/* end loop j */
      D = D * A[n][n];
      if (fabs(A[n][n]) <= tol) {
        printf(" \a \n (%d) Matrix is computationally singular
\n",__LINE__);
        exit(101);
      }


      /* Back-substitution */
      for(i=n+1; i<= n+p; i++){
         A[n][i] = A[n][i] / A[n][n];
         for (j=n-1;j>=1;j--){
          s = A[j][i];
          for (k=j+1;k<=n;k++){
             s = s - A[j][k] * A[k][i];
          } /* end loop k */
          A[j][i] = s / A[j][j];
         } /*end loop j */
      } /* end loop i */
}
/***********************************************************/
void help()
{
      float  A[4][4];
      int i,j;
```

```
        int N;
        N = M;


        printf(" \n please typ \"programname datafile\" \n");
        printf(" The datafile must be in the following form: \n");
        printf(" \tN              <-- SIZE of Matrix
   (2..%d)\n",N);
        printf(" \tA11 A12 A13 ..  <- Matrix Elements\n");
        printf(" \tA21 A22 A23 ..\n");
        printf(" \t..  ..  ..  ..\n");


/* TestData */
        printf(" Testdata: \n");
        A[1][1] = 1; A[1][2] = 0; A[1][3] = sqrt(0.5);
        A[2][1] = 0; A[2][2] = 1; A[2][3] = sqrt(0.5);
        A[3][1] = 1; A[3][2] = 0; A[3][3] = 0;
        printf("  3\n");
        for(i=1;i<=3;i++){
          for(j=1;j<=3;j++)
            printf("%18.14f ",A[i][j]);
        printf("\n");
        }


        printf(" \nInverse Matrix: \n");
        A[1][1] =  0;           A[1][2] =  0; A[1][3] = 1;
        A[2][1] = -1;           A[2][2] =  1; A[2][3] = 1;
        A[3][1] =  sqrt(2.0); A[3][2] =  0; A[3][3] = sqrt(2.0);
        for(i=1;i<=3;i++){
           for(j=1;j<=3;j++)
             printf("%18.14f ",A[i][j]);
        printf("\n");
        }
}
/******************* END *****************************/
```

This routine needs 258 steps (including user messages and inputs) with a debugger to invert an encoder matrix with a size of 5*5 on a PC.

In the DSP32C library exists the function " matinf" which needs approx. 90µs for one 5*5 matrix inversion. This leads to a total computing time of approx. 1ms for 11 full matrix inversions.

For comparison: The MPEG decoder filter for 5 channels needs approx. 30ms computing time. I.e. the workload of the matrix inversion is only about 3.3% of the filter workload. Advantageously, the computation of the decoder matrix within the decoder does neither need the storage of 62 matrices nor need any restriction of the quantity of possible encoder matrices.

Fig. 2 shows a block diagram for decoder matrix computations. The computations can be made using data extractor means 21, which extract from the MPEG data stream 20 the header information comprising the required input parameters, and memory means 22 in which the respective computation software operating on these input parameters for constructing the decoder matrix is stored and the output data of which are input together with the transmitted audio data of the MPEG data stream 20 to fast processor means 23 which apply the reconstructed decoder matrix to the audio data fed to a respective loudspeaker arrangement.

The invention can be used in MPEG TV receivers and in the fields listed in the background paragraph.

**Claims**

1. Method for obtaining in a decoder a multi-channel (L, R, C, Ls, Rs) decoder matrix which corresponds to an encoder matrix and which is required for recovering an encoded digital audio signal from a bitstream which has been encoded using said encoder matrix, wherein in header bits in the bitstream an indication information is included which comprises channel on/off data, channel factor data, and channel allocation data, **characterised by** the steps:

   - determining from said indication information the number of channels and therewith the encoder matrix size, and inserting 0/1 matrix elements corresponding to said channel on/off data into the corresponding positions within said encoder matrix to be reconstructed;
   - determining from said channel factor data further matrix elements and inserting them into corresponding further positions within said encoder matrix to be reconstructed;
   - determining from said channel allocation data the remaining matrix elements and inserting them into the remaining positions within said encoder matrix to be reconstructed, wherein the encoder matrix defines how the original channel signals before matrixing have been combined in order to obtain matrixed channel signals for transmission;
   - performing a matrix inversion of the reconstructed encoder matrix in order to obtain said decoder matrix.

2. Method according to claim 1, wherein basic left and right channel signals in the bitstream are compatible with the ISO 11172-3 standard.

3. Usage of the method according to claim 1 or 2 in a TV receiver, a VCR, a CD player or a multi-channel sound system.

**Patentansprüche**

1. Verfahren, um in einem Decoder eine Multikanal (L, R, C, Ls, RS) -Dekodier-Matrix zu erhalten, die einer Kodiermatrix entspricht, und die erforderlich ist, um ein kodiertes digitales Audiosignal aus einem Bit-Strom wiederzugewinnen, der unter Verwendung der Kodiermatrix kodiert worden ist, wobei in Header-Bits in dem Bit-Strom eine Anzeigeinformation enthalten ist, die Kanal-Ein/Aus-Daten, Kanal-Faktordaten und Kanal-Zuordnungsdaten umfaßt,
   **gekennzeichnet durch** die Schritte:

   - Bestimmung der Zahl von Kanälen und damit der Kodier-Matrixgröße aus den Anzeigeinformationen und Einsetzen von 0/1 Matrixelementen entsprechend den Kanal-Ein/Aus-Daten in die entsprechenden Positionen innerhalb der zu rekonstruierenden Kodiermatrix;
   - Bestimmung weiterer Matrixelemente aus den Kanal-FaktorDaten und Einfügen von ihnen in entsprechende weitere Positionen innerhalb der zu rekonstruierenden Kodiermatrix;
   - Bestimmung der verbleibenden Matrix-Elemente aus den Kanal-Zuordnungsdaten und Einfügen von ihnen in die verbleibenden Positionen in der zu rekonstruierenden Kodiermatrix, wobei die Kodiermatrix definiert, wie die ursprünglichen Kanal-Signale vor der Matrizierung kombiniert worden sind, um die matrizierten Kanal-Signale für die Übertragung zu erhalten;
   - Ausführung einer Matrix-Inversion der rekonstruierten Kodiermatrix, um die Dekodier-Matrix zu erhalten.

2. Verfahren nach Anspruch 1, bei dem die linken und rechten Basis-Kanal-Signale in dem Bit-Strom kompatibel mit der ISO 11172-3-Norm sind.

EP 0 631 458 B1

3. Verwendung des Verfahrens gemäß Anspruch 1 oder 2 in einem Fernsehempfänger, einem VCR, einem CD-Spieler oder einem Mehrkanal-Tonsystem.

**Revendications**

1. Procédé pour l'obtention, dans un décodeur, d'une matrice de décodage multicanal (L, R, C, Ls, Rs) correspondant à une matrice de codage et nécessaire à la restitution d'un signal audionumérique codé à partir d'un train binaire qui a été codé à l'aide de ladite matrice de codage, dans lequel des informations indicatives sont incorporées dans des bits d'en-tête dans le train binaire, lesquelles comprennent des données d'activation/désactivation de canaux, des données de facteurs de canaux et des données d'affectation de canaux, **caractérisé par** les étapes consistant à :

   - déterminer, à partir desdites informations indicatives, le nombre de canaux et, avec lui, la taille de la matrice de codage, et insérer des éléments de matrice 0/1, correspondant auxdites données d'activation/désactivation de canaux, dans les positions correspondantes au sein de la matrice de codage à reconstituer ;
   - déterminer, à partir desdites données de facteurs de canaux, d'autres éléments de matrice et insérer ceux-ci dans d'autres positions correspondantes au sein de ladite matrice de codage à reconstituer ;
   - déterminer, à partir desdites données d'affectation de canaux, les éléments de matrice restants et insérer ceux-ci dans les positions restantes au sein de ladite matrice de codage à reconstituer, la matrice de codage définissant la façon dont les signaux de canaux d'origine ont été combinés préalablement au matriçage pour obtenir des signaux de canaux matricés pour la transmission ;
   - effectuer une inversion matricielle de la matrice de codage reconstituée pour obtenir ladite matrice de décodage.

2. Procédé selon la revendication 1, dans lequel les signaux des canaux gauche et droit de base dans le train binaire sont compatibles avec la norme ISO 11172-

3. Utilisation du procédé selon la revendication 1 ou 2 dans un récepteur de télévision, un magnétoscope, un lecteur de CD ou un système acoustique multicanal.

Fig.1

Fig.2